# EUROPÄISCHE PATENTSCHRIFT

(11) **EP 1 071 188 B1**
(45) Veröffentlichungstag und Bekanntmachung des Hinweises auf die Patenterteilung: **22.09.2004**
(21) Anmeldenummer: 00113975.7
(22) Anmeldetag: 01.07.2000
(51) Int. Cl.: H02K 5/173

(54) **Elektromotor**
Electric motor
Moteur électrique

(30) Priorität: 20.07.1999 DE 19934000
(43) Veröffentlichungstag der Anmeldung: 24.01.2001
(73) Patentinhaber: Siemens Aktiengesellschaft, 80333 München (DE)
(72) Erfinder: Severien, Herbert, 65824 Schwalbach (DE); Brack, Michael, 65618 Selters (DE)

(56) Entgegenhaltungen:
- DE-A- 1 575 609
- DE-A- 2 939 560
- US-A- 3 351 398
- US-A- 3 469 897
- US-A- 4 113 326
- US-A- 5 872 414
- PATENT ABSTRACTS OF JAPAN vol. 1998, no. 13, 30. November 1998 (1998-11-30) & JP 10 225047 A (ASMO CO LTD), 21. August 1998 (1998-08-21)

## Beschreibung

Die Erfindung betrifft einen Elektromotor mit einem Stator, mit einem drehfest auf einer Welle angeordneten Rotor, mit zwei jeweils ein Lager für die Welle aufweisenden Lagerschilden, wobei eines der Lager als die Welle axial und radial haltendes Festlager und das andere Lager als die Welle ausschließlich radial lagerndes Loslager ausgebildet ist, und mit einem in dem Lagerschild angeordneten Anschlag zur Abstützung des Festlagers in seiner vorgesehenen axialen Lage, wobei das Festlager auf seiner dem Anschlag abgewandten Seite an einem ringförmig gestalteten Federelement anliegt und von dem Federelement elastisch gegen den Anschlag vorgespannt ist.

Solche Elektromotoren werden insbesondere in heutigen Kraftfahrzeugen häufig als Antriebsmittel für bewegliche Bauteile eingesetzt und sind aus der Praxis bekannt. Das Festlager des Elektromotors hat häufig eine Preßpassung auf der Welle des Rotors. Das Lagerschild weist eine Bohrung zur Aufnahme des Festlagers auf. Das Festlager hat in der Bohrung eine Spielpassung. Zur Sicherung in seiner vorgesehenen axialen Lage in dem Lagerschild wird das Festlager in der Bohrung meist verstemmt. Hierdurch besteht jedoch die Gefahr, daß sich das Festlager verzieht und daher eine besonders geringe Lebensdauer hat.

Man hat bereits daran gedacht, zwischen der Verstemmung und dem Festlager eine Unterlegscheibe anzuordnen. Dies führt jedoch zu Setzfugen, die bei einem Betrieb des Elektromotors eine Lockerung des Festlagers ermöglichen. Hierdurch ist das Festlager nicht mehr zuverlässig in seiner vorgesehenen axialen Lage gehalten und kann nach einem weiteren Betrieb des Elektromotors die Bohrung des Lagerschildes ausschlagen. Anschließend hat die Welle in dem Elektromotor ein großes radiales Spiel. Dies führt ebenfalls zu einer besonders geringen Lebensdauer des Elektromotors.

Aus der US 58 72 414 ist ein Elektromotor der eingangs genannten Art bekannt. Sie beschreibt einen Elektromotor mit einem Stator (23), mit einem drehfest auf einer Welle angeordneten Rotor (24), mit zwei jeweils ein Lager für die Welle aufweisenden Lagerschilden (13),(15), wobei eines der Lager (26) als die Welle radial haltendes Lager und das andere Lager (27) als die Welle ausschließlich radial lagerndes Loslager ausgebildet ist, und Mit einem in dem Lagerschild angeordneten Anschlag (95) zur Abstützung des Lagers in seiner vorgesehenen axialen Lage, wobei das Lager (26) auf seiner dem Anschlag abgewandten Seite an einem ringförmig gestalteten Federelement (98) anliegt und von dem Federelement (58) elastisch gegen den Anschlag vorgespannt ist, wobei außerdem das Lagerschild (13) eine Öffnung (Fig. 14) zur Aufnahme des Lagers (26) aufweist und konzentrisch zu der Öffnung (Fig.14) eine Ausnehmung (97) mit größerem Durchmesser als die Öffnung (Fig.14) hat und wobei das Federelement (98) in seinem radial äußeren Bereich (98c), der einen größeren Außendurchmesser hat als das Lager (26) in der Ausnehmung (97) auf seiner dem Lager (26) gegenüberliegenden Seite an der Wand der Ausnehmung (97) des Lagerschildes (93) den radial äußeren Bereich (98c) des Federelements vorspannend axialgesichert ist.

Aus der DE 29 39 560 eine Lagerung bekannt, bei der das Lagerschild einen axialen Anschlag aufweist, gegen den ein Lager von einem Federelement elastisch vorgespannt ist. Dabei ist das Federelement an seinem radial äußeren Bereich mittels Schrauben an dem Lagerschild befestigt.

Aus der US 41 13 326 ist eine Lageranordnung bekannt, bei der ein Lager in einer Bohrung eines Lagerschildes angeordnet ist und von einem Federelement axial gegen einen Anschlag beaufschlagt wird. Das Federelement ist eine birnenförmige Platte aus einem elastischen Material und einer zentralen Öffnung in ihrem Bereich größeren Durchmessers, durch die die Welle ragt. Mit diesem Bereich größeren Durchmessers ist die Platte in eine radial gerichtete Nut im Lagerschild eingesetzt und an ihrem radial äußeren Ende des Bereichs kleineren Durchmessers derart mittels einer Schraube axial an das Lagerschild geschraubt, daß die Platte mit axialer Vorspannung das Lager gegen den Anschlag verspannt.

Aus der DE 15 75 609 und aus der US 34 69 897 sind Lageranordnungen für eine Welle bekannt, bei der ein Lager in eine Bohrung eines Lagerschildes eingesetzt ist und axial von einer elastischen Lagerkappe gegen einen Anschlag des Lagerschildes beaufschlagt ist. Die Lagerkappe ist mittels Schrauben an dem Lagerschild befestigt.

Der Erfindung liegt das Problem zugrunde, einen Elektromotor der eingangs genannten Art so zu gestalten, daß er eine besonders hohe Lebensdauer aufweist.

Dieses Problem wird erfindungsgemäß durch die Merkmale von Anspruch 1 gelöst.

Durch diese Gestaltung wird die Gefahr eines Verzuges des Festlagers bei der Montage des Elektromotors weitgehend vermieden. Weiterhin werden Setzfugen des Festlagers durch die elastische Vorspannung besonders klein gehalten, so daß eine Lockerung des Festlagers in der Bohrung zuverlässig vermieden wird. Deshalb kann das Festlager nicht mehr die Bohrung des Lagerschildes ausschlagen. Der erfindungsgemäße Elektromotor hat daher eine besonders lange Lebensdauer.

Die Vorspannung des Festlagers gegen den Anschlag gestaltet sich konstruktiv besonders einfach und das Federelement hat besonders geringe Abmessungen.

Der Rand kann durch eine Verstemmung des Lagerschildes erzeugt sein.

Weiterhin gestaltet sich der Elektromotor besonders kostengünstig, wenn das Federelement eine aus Stahlblech gefertigte Unterlegscheibe ist. Durch diese Gestaltung läßt sich das Federelement nach Art einer Tellerfeder gestalten. Da zur Vorspannung des Festlagers nur ein besonders geringer Federweg erforderlich ist, kann das Federelement im einfachsten Fall eine handelsübliche Unterlegscheibe aus Stahl mit entsprechend großem Außendurchmesser sein.

Das Festlager hat vorzugsweise eine Spielpassung in der Bohrung.

Die Erfindung läßt zahlreiche Ausführungsformen zu. Zur weiteren Verdeutlichung ihres Grundprinzips ist eine davon in der Zeichnung dargestellt und wird nachfolgend beschrieben. Diese zeigt in einer
- Fig.1: einen Längsschnitt durch einen erfindungsgemäßen Elektromotor,
- Fig.2: eine stark vergrößerte Darstellung eines Festlagers des erfindungsgemäßen Elektromotors aus Figur 1.

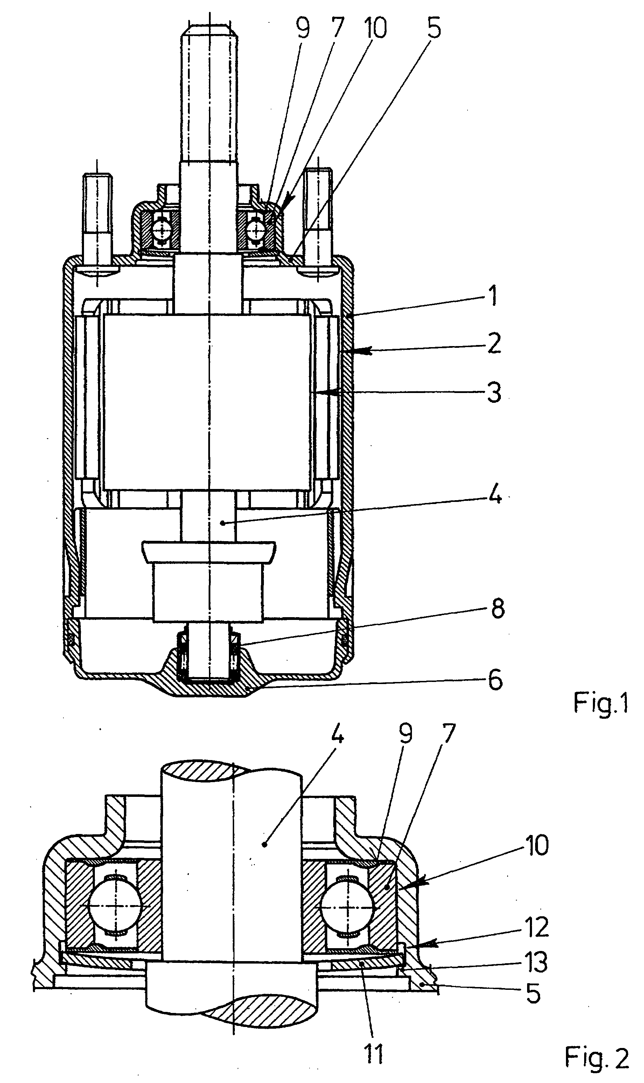

Figur 1 zeigt einen Elektromotor mit einem in einem rohrförmigen Gehäuse 1 feststehend angeordneten Stator 2 und mit einem innerhalb des Stators 2 drehbar gelagerten Rotor 3. Der Rotor 3 ist auf einer Welle 4 befestigt. Das Gehäuse 1 weist an seinen Stirnseiten jeweils ein Lagerschild 5, 6 auf. Eines der Lagerschilde 5 hat ein die Welle 4 in axialer und radialer Richtung halterndes Festlager 7. Das zweite Lagerschild 6 hat ein die Welle 4 ausschließlich radial halterndes Loslager 8. Das das Festlager 7 halternde Lagerschild 5 weist eine von einem Anschlag 9 begrenzte Bohrung 10 zur Aufnahme des Festlagers 7 auf. Das Festlager 7 hat eine Spielpassung in der Bohrung 10 und eine Preßpassung auf der Welle 4.

Figur 2 zeigt in einer stark vergrößerten Darstellung des Elektromotors im Bereich des Festlagers 7 aus Figur 1, daß das Festlager 7 mittels eines Federelementes 11 gegen den Anschlag 9 vorgespannt ist. In dem Lagerschild 5 ist auf der dem Anschlag 9 abgewandten Seite der Bohrung 10 eine Ausnehmung 12 mit größerem Durchmesser als die Bohrung 10 zur Aufnahme des radial äußeren Bereichs des Federelementes 11 angeordnet. Das Federelement 11 wird auf der dem Festlager 7 gegenüberliegenden Seite von einem umlaufenden Rand 13 axial gesichert. Dieser Rand 13 wurde beispielsweise durch eine Verstemmung des Lagerschildes 5 erzeugt. Der Rand 13 spannt den radial äußeren Bereich des Federelementes 11 in Richtung des Anschlages 9 für das Festlager 7 vor. Da das Federelement 11 nur einen besonders geringen Federweg benötigt, kann es als aus Stahlblech gefertigte Unterlegscheibe gestaltet sein.

## Patentansprüche

1. Elektromotor mit einem Stator (2), mit einem drehfest auf einer Welle angeordneten Rotor (3), mit zwei jeweils ein Lager für die Welle aufweisenden Lagerschilden (6),(7), wobei eines der Lager als die Welle axial und radial haltendes Festlager (7) und das andere Lager als die Welle ausschließlich radial lagerndes Loslager (8) ausgebildet ist, und mit einem in dem Lagerschild (5) angeordneten Anschlag (9) zur Abstützung des Festlagers (7) in seiner vorgesehenen axialen Lage, wobei das Festlager (7) auf seiner dem Anschlag abgewandten Seite an einem ringförmig gestalteten Federelement (11) anliegt und von dem Federelement (11) elastisch gegen den Anschlag vorgespannt ist, das Lagerschild (5) wobei eine Bohrung (10) zur Aufnahme des Festlagers (7) aufweist und konzentrisch zu der Bohrung (10) eine Ausnehmung (12) mit größerem Durchmesser als die Bohrung (10) hat und das Federelement (11) in wobei seinem radial äußeren Bereich, der einen größeren Außendurchmesser hat als das Festlager (7) in der Ausnehmung (12) auf seiner dem Festlager (7) gegenüberliegenden Seite von einem Rand (13) des Lagerschildes (5) den radial äußeren Bereich des Federelements (11) in Richtung des Anschlags (9) vorspannend hintergriffen und axial gesichert ist.

2. Elektromotor nach Anspruch 1, **dadurch gekennzeichnet, daß** der Rand (13) durch eine Verstemmung des Lagerschildes (5) erzeugt ist.

3. Elektromotor nach einem der vorhergehenden Ansprüche, **dadurch gekennzeichnet, daß** das Federelement (11) eine aus Stahlblech gefertigte Unterlegscheibe ist.

4. Elektromotor nach einem der vorhergehenden Ansprüche, **dadurch gekennzeichnet, daß** das Festlager (7) eine Spielpassung in der Bohrung (10) hat.

## Claims

1. Electric motor having a stator (2), having a rotor (3) which is arranged in a rotationally fixed manner on a shaft, having two end frames (6), (7) which each have a bearing for the shaft and with one of the bearings being in the form of a fixed bearing (7) which holds the shaft axially and radially and the other bearing being in the form of a loose bearing (8) which bears the shaft exclusively radially, and having a stop (9), which is arranged in the end frame (5), in order to support the fixed bearing in its intended axial position, the side of the fixed bearing (7) which faces away from the stop resting against an annular spring element (11) and being prestressed elastically against the stop by the spring element (11), the end frame (5) having a hole (10) for holding the fixed bearing (7) and having, concentrically with respect to the hole (10), a recess (12) having a larger diameter than the hole (10), and with the spring element (11) being axially secured in its radially outer area, which has a larger external diameter than the fixed bearing (7) in the recess (12) on its side opposite the fixed bearing (7) of a rim (13) of the end frame (5) engaging in a prestressing manner behind the radially outer area of the spring element (11) in the direction of the stop (9).

2. Electric motor according to Claim 1, **characterized in that** the rim (13) is produced by peening over the bearing plate (5).

3. Electric motor according to one of the preceding claims, **characterized in that** the spring element (11) is a washer manufactured from sheet steel.

4. Electric motor according to one of the preceding claims, **characterized in that** the fixed bearing (7) has a clearance fit in the hole (10).

## Revendications

1. Moteur électrique avec u n stator (2), avec un rotor (3) disposé s ur un arbre et solidaire en rotation avec ce dernier, avec deux flasques (6,7) munies chacune d'un palier pour l'arbre, l'un des paliers étant conçu en tant que palier fixe (7) maintenant l'arbre en direction axiale et radiale et l'autre palier étant conçu en tant que p alier libre (8), pour loger l'arbre uniquement en direction radiale et avec une butée (9) disposée dans la flasque (5), pour soutenir le palier fixe (7) dans sa position axiale prévue, le palier fixe (7) s'appliquant sur son côté opposé à la butée sur un élément à ressort (11 ) conçu de forme annulaire et étant précontraint de façon élastique contre la butée, par l'élément à ressort (11), la flasque (5) étant munie d'un alésage (10) pour la réception du palier fixe (7) et ayant de façon concentrique à l'alésage (10) un évidement (12) de diamètre supérieur à celui de l'alésage (10) et dans sa zone radiale extérieure, qui présente un diamètre supérieur à celui du palier fixe (7), dans l'évidement (12), sur son côté opposé au palier fixe (7), l'élément à ressort (11 ) étant accroché par l'arrière et bloqué en direction axiale par un bord (13) de la flasque (5), sous précontrainte de la zone radiale extérieure de l'élément à ressort (11 ) en direction de la butée (9).

2. Moteur électrique selon la revendication 1, **caractérisé en ce que** le bord (13) est créé par un matage de la flasque (5).

3. Moteur électrique selon l'une quelconque des revendications précédentes, **caractérisé en ce que** l'élément à ressort (11) est une rondelle plate fabriquée en tôle d'acier.

4. Moteur électrique selon l'une quelconque des revendications précédentes, **caractérisé en ce que** le palier fixe (7) à un ajustage à jeu dans le perçage (10).
